# NEUE EUROPÄISCHE PATENTSCHRIFT

(11) **EP 0 312 557 B2**
(45) Veröffentlichungstag und Bekanntmachung des Hinweises auf die Entscheidung über den Einspruch: **05.07.1995**
(45) Hinweis auf die Patenterteilung: 15.01.1992
(21) Anmeldenummer: 88903196.9
(22) Anmeldetag: 29.04.1988
(51) Int. Cl.: B60H 1/00, B60H 1/24

(54) **ANORDNUNG ZUR LUFTFÜHRUNG IN FAHRZEUGRÄUMEN**
ARRANGEMENT FOR AIR CIRCULATION IN THE INTERIOR OF MOTOR VEHICLES
AGENCEMENT DE CONDUITE D'AIR DANS L'ESPACE INTERIEUR DE VEHICULES

(30) Priorität: 29.04.1987 DE 3714223
(43) Veröffentlichungstag der Anmeldung: 26.04.1989
(73) Patentinhaber: FRAUNHOFER-GESELLSCHAFT ZUR FÖRDERUNG DER ANGEWANDTEN FORSCHUNG E.V., 80636 München (DE)
(72) Erfinder: MAYER, Erhard, D-8150 Holzkirchen (DE)
(74) Vertreter: Münich, Wilhelm, Dr.
(86) Internationale Anmeldenummer: DE8800258
(87) Internationale Veröffentlichungsnummer: WO8808374

(56) Entgegenhaltungen:
- EP-A- 0 214 605
- DE-A- 1 965 574
- DE-A- 2 126 667
- DE-A- 2 853 659
- DE-A- 2 928 134
- DE-A- 3 302 511
- DE-A- 3 539 063
- GB-A- 1 359 258
- US-A- 3 366 026
- US-A- 4 469 490
- Patent Abstracts of Japan, Band 5, Nr. 83 (M-71)(755),
- Patent Abstracts of Japan, Band 8, Nr. 244 (M-337)(1681), 9. November 1984

## Beschreibung

### Technische Gebiet

Die Erfindung bezieht sich auf eine Anordnung zur Luftführung in Fahrzeugräumen gemäß dem Oberbegriff des Anspruchs 1.

Insbesondere befaßt sich die Erfindung mit dem Problem der Erneuerung der Raumluft in den Innenräumen von Fahrzeugen.

### Stand der Technik

Die Erfindung geht von einer Anordnung zur Luftzuführung in Fahrzeugräumen mit Einleitung aufbereiteter Außenluft (Zuluft) über die Fahrzeugdecke aus, wie sie aus der GB-A-1 359 258 bekannt ist. In dieser Druckschrift ist allgemein vorgeschlagen worden, über den Fahrzeugsitzen individuell zugeordnete und zu deren Sitzflachen im wesentlichen kongruente Austrittsöffnungen in der Fahrzeugdecke durch die die aufbereitete Außenluft senkrecht auf die jeweilige Sitzfläche gerichtet austritt, sowie Öffnungen zur Abführung der Raumluft unter den Fahrzeugsitzen vorzusehen.
Eine derartige Ausbildung erfordert gerade bei großen Fahrzeugen, wie Omnibussen, eine Vielzahl von Austrittsöffnungen, so daß die Realisierung einer Anordnung nach dem Stand der Technik sehr aufwendig ist, wenn die einzelnen Austrittsöffnungen durch jeweils einer Austrittsöffnung zugeordnete Kanäle mit Zuluft versorgt werden.

Es ist weiterhin bekannt, die Zuluft über einen im Winkelbereich zwischen den Seitenwänden und dem Boden des Fahrzeugs angeordneten Kanal einzuleiten, von wo aus sie entweder zur Bildung eines bspw. schräg nach hinten und schräg gegen den Boden fließenden Luftteppichs beiträgt (DE-AS 26 34 715) oder, über Stichkanäle an den Fahrzeugseitenwänden hochgeführt, unterhalb der Fenster austritt (DE-AS 26 34 712).

Bei anderen bekannten Anordnungen findet ein Austausch der Raumluft mit der Außenluft durch Luftein- bzw. Luftauslässe mittels über den Seitenfenstern angeordneten, mit steuerbaren Klappen verschließbaren Schlitzen statt; die Klappen können dabei insbesondere durch Regel- oder Steuereinrichtungen betätigbar sein (DE-AS 26 34 713). In der DE-A 21 26 667 wird eine Anordnung zur Belüftung eines Fahrgastraumes mit Hilfe des Staudrucks oder eines Gebläses beschrieben, bei der zwei Luftströme durch dreieckförmige Längskanäle, wobei die oberen Kanäle zur Belüftung der Heckscheibe und die unteren Kanäle zur Belüftung des Fahrgastraumes herangezogen werden. Durch die oberen Kanäle wird ein Wärmeschutz bewirkt. Aus den unteren Kanälen tritt die Luft durch viele kleine Durchbrechungen in der Bespannung aus, wodurch die Insassen gleichförmig mit Luft berieselt werden.

In der US-A 3 366 026 wird vorgeschlagen, daß zur Luftführung ein Hohlraum zwischen der Dachhaut und der Deckenverschalung verwendet wird. In den in diesem Dokument beschriebenen Zuluftöffnungen befindet sich ein Drahtgewebe.

Von der Luftführung wird gefordert, daß die Luft in den Räumen so verteilt wird, daß trotz geringer Raumabmessungen Zugfreiheit erreicht wird und daß die Raumlufttemperaturen von unten nach oben abnehmen sollen. Die Luftzuführung über die Fahrzeugdecke ist bspw. im Zusammenhang mit der Forderung bekannt, daß gekühlte Luft nur durch Luftverteiler in der Decke zugeführt werden soll (DIN 1946, Bl. 3, Juni 1962).

### Darstellung der Erfindung

Der Erfindung liegt die Aufgabe zugrunde, eine Anordnung zur Luftführung in Fahrzeugräumen gemäß dem Oberbegriff des Anspruchs 1 derart weiterzubilden, daß auch eine Vielzahl von Zuluft-Austrittsöffnungen mit vergleichsweise geringem technischen Aufwand realisierbar sind.

Eine erfindungsgemäße Lösung dieser Aufgabe ist durch den kennzeichnenden Teil des Patentanspruchs 1 angegeben.

Weiterbildungen der Erfindung sind in den Unteransprüchen gekennzeichnet.

### Kurze Beschreibung der Zeichnung

Die Erfindung wird nachstehend anhand eines Ausführungsbeispiels unter Bezugnahme auf die Zeichnung näher beschrieben, in der zeigen:
- Fig. 1: eine Vereinigung von Längsschnitten durch einen Personenkraftwagen mit einer Anordnung gemäß der Erfindung.

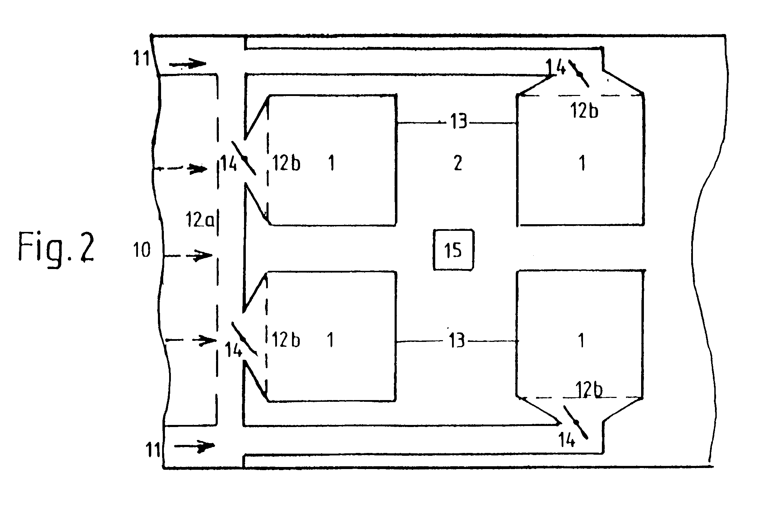

- Fig. 2: im wesentlichen eine Draufsicht auf die innere Schale der zweischaligen Hohldecke des Fahrzeugs mit erfindungsgemäß ausgebildeten Austrittsöffnungen für die Zuluft.

### Beschreibung eines bevorzugten Ausführungsbeispiels

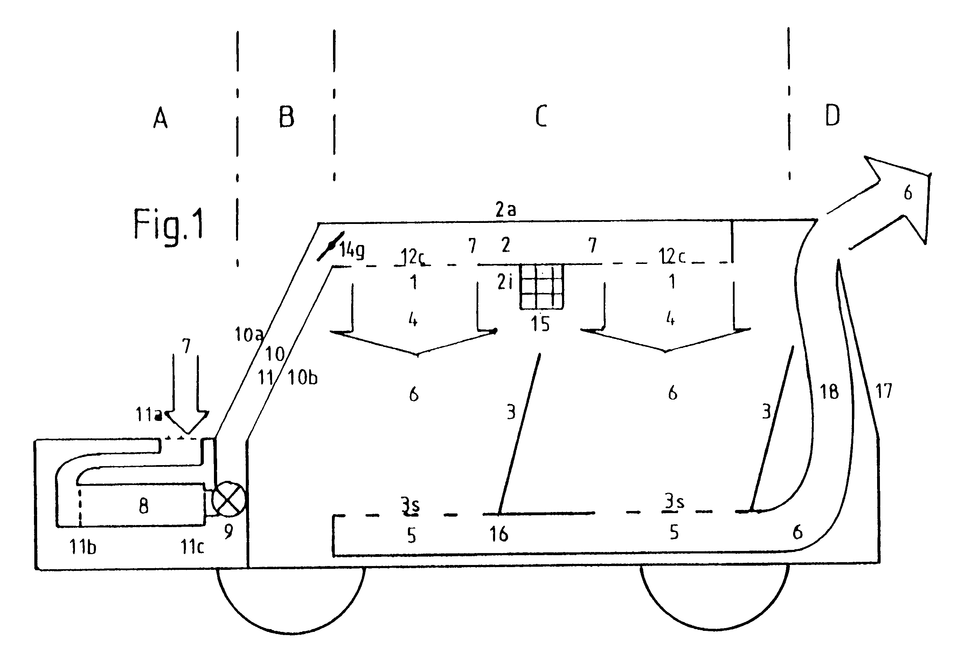

Fig. 1 zeigt einen Längsschnitt durch einen schematisch dargestellten PKW, der in vier Felder bzw. Bereiche A bis D "aufgeteilt" ist, die jeweils einen Teil von vier verschiedenen Längsschnitten des Fahrzeugs eingrenzen.

Die in Fig. 1 dargestellten Längsschnitte müssen nicht notwendig in einer Ebene liegen, sie sind lediglich zur Vereinfachung der Darstellung in der Zeichenebene der Fig. 1 vereint.

Das Feld A umfaßt einen Längsschnitt durch den vorderen Bereich des Fahrzeugs, der in der Regel unter einer Abdekkung (Motorhaube) das hier nicht dargestellte Antriebsaggregat des Fahrzeugs aufnimmt. Im Bereich A befindet sich der Einlaß für Frischluft mit einen Filter 11a, vorzugsweise einem Staubfilter, für die Außenluft 7.

Dieser Einlaß ist in der Figur als oben liegend angenommen, kann sich aber ebensogut auch an einer anderen Stelle der Abdeckung bzw. des Fahrzeugs-Vorderteils befinden.

Der Lufteinlaß führt über einen Kanal und einen weiteren Filter 11b zu einer Einrichtung 8, durch die die zugeführte Außenluft nach Bedarf wahlweise mit üblichen Mitteln erwärmt oder abgekühlt werden kann. Die Einrichtung 8, die auch eine andere als die in der Figur angenommene Lage, insbesondere relativ zur Fahrtrichtung des Fahrzeugs, einnehmen kann, schließt mit einem weiteren Filter 11c ab, an das sich erforderlichenfalls eine Druckquelle 9, vorzugsweise ein Gebläse, zur Strömungsverstärkung bzw. zur Verdichtung der zugeführten und mittels der Filter 11a...c sowie der Einrichtung 8 aufbereiteten Außenluft 7 anschließt.
Im Feld B der Fig. 1 gelangt die Luft von der Druckquelle 9 über einen nicht im einzelnen dargestellten, aus den beiden luftdicht miteinander verbundenen Schalen eines zweischaligen Armaturenbretts als Übergang gebildeten Hohlkörper und einen daran anschließenden Kanal 10 bzw. 11 zu der aus den Schalen 2a und 2i gebildeten Hohldecke im Feld C der Fig. 1. Der Kanal 10 wird von den beiden Scheiben 10a und 10b einer in luftdichter Zweischeiben-Verglasung erstellten Windschutzscheibe 10, der Kanal 11 durch die als luftdichte Hohlkörper ausgebildeten vorderen Fahrzeugsäulen 11 gebildet, die die Windschutzscheibe 10 zwischen sich einschließen, die in diesem Fall wie sonst üblich einscheibig ist.

Die erfindungsgemäße Art der Luftführung zwischen der Druckquelle 9 und der Hohldecke 2 zeichnet sich dadurch aus, daß durch die eingeleitete Außenluft 7 das von ihr passierte zweischalige Armaturenbrett und insbesondere dessen oberes Abschlußteil, das von der durch die Windschutzscheibe einstrahlenden Sonnenenergie erfahrungsgemäß stark aufgeheizt werden kann, wirkungsvoll gekühlt werden kann.

Wird eine Luftführung zwischen den Scheiben 10a und 10b der zweischeibigen Windschutzscheibe 10 vorgesehen, so bietet sich in Verbindung mit der Temperierungsmöglichkeit durch die Einrichtung 8 darüberhinaus die Möglichkeit, die zweischeibige Windschutzscheibe in einfacher Weise zu enteisen bzw. von Kondensat zu befreien. In diesem Fall ist es vorteilhaft, Vorkehrungen zu treffen, um eine der beiden Scheiben, vorzugsweise die innere Scheibe 10b, leicht zu öffnen, vorzugsweise aufklappen bzw. kippen zu können, um den Raum zwischen den Scheiben im Bedarfsfall leicht reinigen zu können.

Die im übrigen einen geschlossenen Kasten bildende Hohldecke 2 wirkt als Sammler für die ihr zugeführte, aufbereitete Außenluft 7. Die äußere Schale 2a, der Hohldecke ist wärmegedämmt, um eine Aufheizung bzw. einen Wärmeverlust der aufbereiteten Luft 7 an die Umgebung zu vermeiden. Die innere Schale 2i besteht dagegen aus einem Material geringer Wärmekapazität, durch welches der Wärmeinhalt der aufbereiteten Luft 7 nicht nachhaltig verändert wird.

In die Deckenschale 2i sind flächenhafte Austrittsöffnungen 1 eingelassen, deren Zahl und Abmessungen sich danach richtet, daß sich Fahrzeugsitze 3 unter ihnen befinden.
Die Form der Öffnungen ist im wesentlichen kongruent mit den Sitzflächen 3s der Sitze 3.

Die Austrittsöffnungen 1 sind durch Kassetten 13 voneinander abgegrenzt, die sie überdecken und die sich bis zur äußeren Schale 2a erstrecken. Die Kassetten 13 bilden damit abgeschlossene Räume innerhalb der zweischaligen Fahrzeugdecke 2, zu denen die aufbereitete Außenluft 7 nur durch Lufteinlässe Zugang hat, deren wirksamer Querschnitt durch Drosselglieder 14 zu regulieren ist. Diese Drosselglieder sind von den zugeordneten Fahrzeugsitzen 3 aus durch mechanisch betätigbare Stellglieder, wie Bowdenzüge, oder durch elektrische Stellmotoren nach den individuellen Bedürfnissen der Fahrgäste einzustellen. Eine Grundeinstellung, die insbesondere bei der Zufuhr erwärmter Luft in Betracht kommt, kann vom Fahrzeugführer durch Betätigung eines Drosselgliedes im Zugang zu der Hohldecke 2, wie bspw. der Drosselklappe 14g, vorgenommen werden.

Die flächenhaften Austrittsöffnungen 1 sind mit Mitteln versehen, die die Ausbildung turbulenzarmer und damit von Zugerscheinungen freier, senkrecht auf die Fahrzeugsitze 3 gerichteter Zuluftströme 4 bewirken. Hierfür kommen vorzugsweise feinmaschige Gewebe, wie bspw. Polyester-Gewebe 120 HD oder Metalltuch 10340158 (Edelstahl), welches gegen mechanische Belastungen unempfindlicher ist, in Betracht.

Diese Gewebe haben genauso wie die innere Deckenschale 2i eine geringe Wärmekapazität. Insgesamt wird so bewirkt, daß sich die Oberflächentemperatur der inneren Deckenschale 2i praktisch auf den Wert der relativ niedrigen Temperatur der zugeführten Luft 7 einstellt bzw. die Oberflächentemperatur über den Köpfen der Fahrzeuginsassen reduziert und damit die angestrebte Abnahme der Raumlufttemperatur von unten nach oben gesichert wird.

Die sich ansammelnde Raumluft 6 wird als Abluft über Abluftöffnungen 5 in einem Hohlraum 16 des Fahrzeugs gesammelt, an den ein Abluftkanal 18 im Feld D der Fig. 1 anschließt, dessen konstruktive Gestaltung sich nach den gegebenen Möglichkeiten des Fahrzeugs richtet. Der Kanal 18 führt zu einer Kante des Fahrzeughecks 17, vorzugsweise zu dessen oberer Kante, an der sich während der Fahrt aufgrund des Fahrtwindes ein Unterdruck ausbildet, der die Abfuhr der Raumluft 6 wirkungsvoll unterstützt.

Besonders vorteilhaft ist es, die Drosselglieder 14 und 14g mittels einer Regeleinrichtung 15 zu betätigen, die auf die Temperatur der Umschließungsflächen des Innenraums, die Temperatur und die Feuchte der Zuluft 4 bzw. der Raumluft 6, und zwar je nach Bedarf auf eine oder mehrere dieser Zustandsgrößen reagiert.

Als Regeleinrichtung solcher Art kommt erfindungsgemäß mit besonderem Vorteil das in der Deutschen Patentanmeldung P 32 05 704.0-52 beschriebene Behaglichkeitsmeßgerät in einer Ausführung mit vier, nach vorne, nach hinten, nach links und nach rechts gerichteten Meßflächen zum Einsatz.
Diese Meßflächen liefern eine fiktive "Hauttemperatur" bei vorgegebener Heizleistung. Jeder Fahrzeuginsasse kann den Wert dieser "Hauttemperatur von seinem Platz aus einstellen, wobei ein Mikrorechner die von den vier Meßflächen im einzelnen registrierten Werte integriert. Bei Abweichung von Soll- und Istwert werden die Drosselglieder 14 durch von dem Mikroprozessor gesteuerte Elektromotoren verstellt und damit die jeweiligen Luftvolumenströme 4 verändert.

Eine andere Möglichkeit, die Zuluftströme individuell zu temperieren besteht mit der Zufuhr regulierbarer Kühlmittelströme zu den Kassetten 13.

## Patentansprüche

1. Anordnung zur Luftführung in Fahrzeugräumen mit
- in der Fahrzeugdecke (2i) angeordneten Austrittsöffnungen (1) für die aufbereitete Außenluft (7), die den Fahrzeugsitzen (3) individuell zugeordnet und zu deren Sitzflächen (3s) im wesentlichen kongruent sind, und durch die die aufbereitete Außenluft (7) individuell und senkrecht auf die jeweilige Sitzfläche (3s) gerichtet austritt, und
- Abluftöffnungen (5) unter den Fahrzeugsitzen (3) zur Abführung der Raumluft (6),
dadurch **gekennzeichnet**, daß die Fahrzeugdecke (2) aus einer äußeren, wärmegedämmten Schale (2a) und einer inneren, mit den Austrittsöffnungen (1) versehenen Schale (2i) besteht, die einen, einen geschlossenen Kasten bildenden Hohlraum (2) einschließen, der als Sammler für die zugeführte, aufbereitete Außenluft (7) dient, in dem Mittel zur Beruhigung der senkrecht auf die Fahrzeugsitze gerichteten Zuluftströme (4) und zur Bildung einer turbulenzarmen Strömung vorgesehen sind, wobei die Mittel zur Beruhigung der Zuluftströme (4) als Strömungsgleichrichter ausgebildete Filter und/oder als Strömungsgleichrichter wirkende Bespannungen (12c) der Austrittsöffnungen (1) sind, daß die Wärmekapazität der inneren Schale (2i) so gering ist, daß sich deren Oberflächentemperatur praktisch auf den Wert der Temperatur der zugeführten aufbereiteten Außenluft einstellt, und daß die flächenhaft ausgebildeten Austrittsöffnungen mit Mitteln versehen sind, wodurch die aufbereitete Außenluft (7) turbulenzarm auf die Fahrzeugsitze verteilt wird.

2. Anordnung nach Anspruch 1,
dadurch **gekennzeichnet**, daß die Außenluft (7) vom Vorderteil des Fahrzeugs über Einrichtungen (8,9) zu ihrer Temperierung (8) und/oder zur Verstärkung ihrer Strömung (9) zu den flächenhaften Austrittsöffnungen (Laminisatoren, 1) in den Innenraum leitbar ist.

3. Anordnung nach Anspruch 2,
dadurch **gekennzeichnet**, daß die Austrittsöffnungen Laminisatoren (1) sind.

4. Anordnung nach einem der Ansprüche 1 bis 3,
dadurch **gekennzeichnet**, daß die Außenluft (7) durch die als luftdichte Hohlkörper ausgebildeten, die Windschutzscheibe (10) einschließenden vorderen Fahrzeugsäulen (11) der Hohldecke (2) zuführbar ist.

5. Anordnung nach einem der Ansprüche 1 bis 4,
dadurch **gekennzeichnet**, daß die Außenluft (7) zumindest zum Teil durch ein zweischalig ausgeführtes Armaturenbrett und/oder zwischen den Scheiben (10a, 10b) einer in Mehrscheibenverglasung ausgeführten Windschutzscheibe (10) der Hohldecke (2) zuführbar ist.

6. Anordnung nach Anspruch 5,
dadurch **gekennzeichnet**, daß wenigstens eine der Scheiben (10a, 10b) zum Reinigen geöffnet werden kann.

7. Anordnung nach Anspruch 6,
dadurch **gekennzeichnet**, daß die Scheibe aufklappbar gelagert ist.

8. Anordnung nach einem der Ansprüche 1 bis 7,
**gekennzeichnet** durch Mittel (11a, b, c) zur Aufbereitung der der Hohldecke (2) zugeführten Außenluft (7).

9. Anordnung nach Anspruch 8,
dadurch **gekennzeichnet**, daß die Mittel eine Heiz- und/oder Kühleinrichtung für die Zuluft sowie Abgas- und/oder Staubfilter sind.

10. Anordnung nach einem der Ansprüche 1 bis 9,
**gekennzeichnet** durch in die Hohldecke (2) eingelassene, die Austrittsöffnungen (1) überdeckende und voneinander abgrenzende Kassetten (13), die in Verbindung mit Drosselgliedern (14) die Zuluftströme (4) auf die einzelnen Austrittsöffnungen (1) verteilen und die Stärke der Ströme regeln.

11. Anordnung nach Anspruch 10,
dadurch **gekennzeichnet**, daß die Drosselglieder (14) einzeln von den Fahrzeugsitzen (3) aus betätigbar sind.

12. Anordnung nach einem der Ansprüche 1 bis 11,
**gekennzeichnet** durch auf die Temperatur der Umschließungsflächen des Innenraums und/oder auf die Temperatur und/oder die Feuchtigkeit der Zuluft (4) und/oder der Raumluft (6) reagierende Regeleinrichtungen (15) zur Betätigung der Drosselglieder (14).

13. Anordnung nach Anspruch 12,
**gekennzeichnet** durch die Verwendung eines Behaglichkeitsmeßgeräts als Regeleinrichtung (15).

14. Anordnung nach einem der Ansprüche 1 bis 11,
**dadurch gekennzeichnet**, daß die Abluftöffnungen (5) mit einem Hohlboden (16) des Fahrzeugs in Verbindung stehen, dessen Hohlraum in einen Kanal (18) zum Fahrzeugheck (17) übergeht, durch den die Abluft (6) entgegen der Fahrtrichtung durch den während der Fahrt sich dort ausbildenden Unterdruck abgeführt wird.

## Claims

1. Arrangement for air circulation in the interior of vehicles, comprising
- discharge openings (1) disposed in the vehicle top (2i), which are individually associated with the vehicle seats (3) and substantially congruent with the seating surfaces (3s), through which openings the regenerated outside air is discharged in a direction normal to the respective seating surface (3s), and
- exhaust air openings (5) underneath the vehicle seats (3) for removal of the inside air (6),
**characterized** in that said cavity-type vehicle top (2) is constituted by an outside, thermally insulated shell (2a) and an inside shell (2i) provided with said discharge openings (1), both shells enclosing a hollow space (2) forming an enclosed box which serves to collect the supplied regenerated outside air (7), wherein means are provided for smoothing the ingoing-air flows (4) directed normally to said vehicle seats and for forming low-turbulence flow, which means for smoothing the ingoing-air flows (4) are filters designed as flow rectifiers and/or grilles (12c) producing the effect of flow rectifiers,
that the thermal capacity of said inside shell (2i) is so low that the latter's surface temperature adjusts itself practically to the value of the temperature of the supplied regenerated outside air, and that said discharge openings of areal design are provided with means for distributing the regenerated outside air (7) to the vehicle seats at low turbulence.

2. Arrangement according to Claim 1,
**characterized** in that provisions are made for passing the outside air (7) from the front vehicle part to said areal discharge openings (laminators, 1) into the interior, through means (8, 9) for adjusting its temperature to a physically agreeable level and/or for intensifying its flow (9).

3. Arrangement according to Claim 2,
**characterized** in that said discharge openings are laminators (1).

4. Arrangement according to any of Claims 1 to 3,
**characterized** in that the outside air (7) may be supplied through the front vehicle columns (11) to said hollow top (2), which columns are configured as airtight hollow bodies surrounding the windscreen (10).

5. Arrangement according to any of Claims 1 to 4,
**characterized** in that the outside air (7), or at least one part thereof, may be supplied through a cavity-type dashboard and/or between the panes (10a, 10b) of a windscreen (10) having a multi-glazed pane configuration.

6. Arrangement according to Claim 5,
**characterized** in that at least one of said panes (10a, 10b) may be opened for cleaning.

7. Arrangement according to Claim 6,
**characterized** in that the pane is supported for being swung open.

8. Arrangement according to any of Claims 1 to 7,
**characterized** by means (11a, b, c) for regenerating the outside air (7) supplied to said hollow top (2).

9. Arrangement according to Claim 8,
**characterized** in that said means are a supply air heating and/or cooling means as well as exhaust gas and/or dust filters.

10. Arrangement according to any of Claims 1 to 9,
**characterized** by bays (13) embedded in said hollow top (2) to cover and separate said discharge openings (1), which bays cooperate with throttling elements (14) to distribute the ingoing-air flows (4) to the individual discharge openings (1) and to adjust the intensity of the flows.

11. Arrangement according to Claim 10,
**characterized** in that said throttling elements (14) are adapted to be operated individually from the vehicle seats (3).

12. Arrangement according to any of Claims 1 to 11,
**characterized** by control means (15) responsive to the temperature of the surfaces enclosing the interior and/or to the temperature and/or the humidity of the ingoing air (49 and/or the inside air (6), for operating said throttling elements (14).

13. Arrangement according to Claim 12,
**characterized** by the the application of a comfort measuring instrument as said control means (15).

14. Arrangement according to any of Claims 1 to 13,
**characterized** in that said exhaust air openings (5) communicate with a hollow base (16) of the vehicle, whose cavity passes over into a duct (18) leading to the vehicle tail (17), through which the exhaust air (6) is carried off in opposition to the driving direction by the vacuum created there as the vehicle is driven.

## Revendications

1. Agencement de conduite d'air dans des espaces intérieurs de véhicules, qui comprend
- des orifices d'échappement (1) disposés dans la toiture du véhicule (2i), qui sont individuellement affectés aux sièges de véhicule (3) et qui sont essentiellement congruents avec les surfaces de siège (3s), à travers lesquels orifices de l'air neuf régénéré (7) s'échappe et est dirigé verticalement aux surfaces de siège respectives (3s), ainsi que
- des orifices d'évacuation d'air (5) sous les sièges du véhicule (3) en vue d'évacuer de l'air ambiant (6),
**caractérisé** en ce que le plafond de véhicule est constitué par une coque extérieure calorifuge (2a) et une coque intérieure (2i) munie desdits orifices d'évacuation (1), qui renferment un espace creux (2) formant une caisse fermée, qui sert comme collecteur de l'air neuf régénéré admis (7), et dans lequel sont prévus des moyens de répartition des courants d'air admis, qui sont dirigés orthogonalement vers les sièges du véhicule, ainsi que de formation de courants d'air à failble turbulence, lesdits moyens de répartition des courants d'air admis sont des filtres à configuration d'un redresseur de courant, et/ou des recouvrements (12c) desdits orifices d'évacuation (1), qui produisent l'effet d'un redresseur de courant,
et en ce que la capacité calorifique de ladite coque intérieure (2i) est si petite que température superficielle de la dernière s'ajuste pratiquement au niveau de la température de l'air neuf régénéré admis, et en ce que lesdits orifices d'échappement sont munis des moyens à distribuer de l'air neuf régénéré, à turbulence réduite, sur les sièges du véhicule.

2. Agencement selon la revendication 1,
**caractérisé** en ce que l'air neuf (7) est dirigeable de l'avant du véhicule par des moyens (8, 9) en vue de son équilibrage de température (8) et/ou pour l'intensification de sa circulation (9), vers lesdits orifices d'échappement en forme d'aires (laminisateurs 1), dans l'espace intérieur.

3. Agencement selon la revendication 2,
**caractérisé** en ce que les orifices d'échappement sont des laminisateurs (1).

4. Agencement selon une quelconque des revendication 1 à 3,
**caractérisé** en ce que l'air neuf (7) peut être admis au plafond creux (2), par les montants de carrosserie avant (11) qui ont la configuration des corps creux étanche à l'air et qui entourent le pare-brise (10).

5. Agencement selon une quelconque des revendications 1 à 4,
**caractérisé** en ce que de l'air neuf (7), au moins en en partie, est amenable au plafond creux (2) par un tableau de bord à double coques, et/ou en traversant entre les vitres (10a, 10b) d'un pare-brise réalisé à vitrage multiple (10).

6. Agencement selon la revendication 5,
**caractérisé** en ce qu'au moins une desdites vitres (10a, 10b) peut être ouverte pour le nettoyage.

7. Agencement selon la revendication 6,
**caractérisé** en ce que la vitre est logée pour être repliable.

8. Agencement selon une quelconque des revendications 1 à 7,
**caractérisé** par des moyens (11a, b, c) à régénérer de l'air neuf admis (7) au plafond creux (2).

9. Agencement selon la revendication 8,
**caractérisé** en ce que lesdits moyens sont des dispositifs à chauffer et/ou réfrigérer l'air amené, ainsi que des dispositifs de filtration de l'air évacué et/ou des filtres dépoussiéreurs.

10. Agencement selon une quelconque des revendications 1 à 9,
**caractérisé** par des caissons (13) encastrés dans ledit plafond creux (2), qui recouvrent lesdits orifices d'évacuation (1) et sont délimités l'un de autre, et qui coopèrent avec des éléments d'étranglement (14) de façon à répartir les courants d'air amené (4) aux orifices d'évacuation respectifs (1) et régler l'intensité des courants.

11. Agencement selon la revendication 10,
**caractérisé** en ce que lesdits éléments d'étranglement (14) sont actionnables individuellement à partir des sièges de véhicule (3).

12. Agencement selon une quelconque des revendications 1 à 11,
**caractérisé** par des moyens de réglage (15) qui répondent à la température des surfaces qui entourent l'espace intérieur, et/ou à la température et/ou à l'humidité de l'air amené (4) et/ou de l'air ambiant (6), de façon à actionner lesdits éléments d'étranglement (14)

13. Agencement selon la Revendication 14,
**caractérisé** par l'application d'un appareil de mesurage du bien-être en tant que moyens de réglage (15).

14. Agencement selon une quelconque des Revendications 1 à 11,
**caractérisé** en ce que lesdits orifices d'évacuation d'air (5) se trouvent en communication avec un plancher creux (16) du véhicule, dont l'espace creux passe dans un canal (18) vers l'arrière du véhicule (17), et par lequel de l'air d'évacuation (6) est évacué en direction opposée au sens de marche, par le vide partiel qui s'y forme au cours de la conduite.
